# EUROPEAN PATENT APPLICATION

(11) **EP 3 228 900 A1**
(43) Date of publication of application: **11.10.2017**
(21) Application number: 15842222.0
(22) Date of filing: 16.09.2015
(51) Int. Cl.: F16F 15/12

(54) **NOVEL DAMPING STRUCTURE AND CONSTRUCTION METHOD THEREOF**

(30) Priority: 16.09.2014 CN 201410472522
(71) Applicant: Shanghai Yanfeng Jin Qiao Automotive Trim Systems Co., Ltd., Shanghai 201206 (CN)
(72) Inventor: JIANG, Yong, Shanghai (CN); LV, Jichao, Shanghai (CN); WANG, Wanli, Shanghai (CN); ZOU, Haifeng, Shanghai (CN)
(74) Representative: Trinks, Ole
(86) International application number: PCT/CN2015/089717
(87) International publication number: WO 2016/041494

(57) **Abstract**

A novel damping structure and manufacturing method thereof is provided, comprising: an axially extending shaft sleeve, and a friction plate and a metal frame which are successively arranged outside of said shaft sleeve, said friction plate comprising C-caped portion encircled said shaft sleeve and an extending portion of friction plate with up and down layers extending parallel to each other from both opposite edges of said first C-shaped portion, said metal frame being an extrusion member made of aluminum alloy or copper alloy and comprising a C-shaped portion of metal frame overlapped said first C-shaped portion of said friction plate and an extending portion of metal frame with up and down layers extending parallel to each other from both opposite edges of said second C-shaped portion, a fastener extending through said first extending portion and said second extending portion is provided for adjusting a pressing force between the friction plate and metal frame and thereby indirectly adjusting the friction force between said shaft sleeve and friction plate, a friction surface formed between said shaft sleeve and said friction plate. The invention utilizes the aluminum alloy or the copper alloy to form the metal frame by the extrusion process, which retains not only the high stability and high precision of the extrusion process, but also high hardness and low density characteristics of aluminum alloy, and releases the internal plastic deformation stress within the metal frame.

## Description

### TECHNICAL FIELD

This invention relates to a damping structure, and more particularly to a novel damping structure and manufacturing method thereof.

### BACKGROUND

Damping structures are known to slow down the relative rotation of two parts (e.g. stationary part and rotating part), so as to maintain the rotation under a predetermined speed in some products. Taking a car's moveable armrest with storage box cover for example, when the lock is opened, the box cover will automatically open under the action of a spring. Then the damping structure will prevent the box cover from abrupt springing open. When the brake mechanism is released, the damping structure will prevent the box cover from rapidly closing due to its own weight and/or spring tension.

However, the above mentioned damping structures usually only have the slow down effect, but cannot control the rotating part to stop at any position.

Patent document JP 200923575 discloses a damping structure, which comprises, in proper order from outside to inside, a clamping member made of spring steel, a plastic friction plate and a rotation shaft. Wherein, the clamping member and the friction plate are fixed and adjusted the clamping force their between by screws, and a friction force is formed between the rotation shaft and the friction plate.

Patent document CN 201320296282.5 also discloses a damping structure, which comprises, in proper order from outside to inside, a metal frame made of stainless steel or metallic manganese, a plastic friction sleeve and a rotating shaft. Wherein, the metal frame is mounted to the stationary part by means of screw bolts and nuts by which the clamping force is adjusted. The rotating shaft has a waist-shaped cross-section that is matched to a flat hole in the friction sleeve. A friction force is formed between the friction sleeve and the metal frame.

Although the above two patents both take stop effect, the metal clamping members, which act as the damping structure, are mainly made from steel or manganese material and shaped through casting, stamping, bending and other processes. Thus the clamping members produced in those ways have the following drawbacks: 1) although the clamping members formed through casting can ensure the thickness, but this kind of process results in low precision with a tolerance of about ± 1mm or more. In order to obtain a higher precision, it is necessary to conduct a secondary processing to clamping member, which leads to cost increasing and process complex. 2) The metal pieces produced by traditional casting, stamping and bending cannot eliminate the stress therein and thus the clamping members usually have internal plastic deformation stress. Only after overcoming the internal plastic deformation stress can the bolts and nuts adjust the clamping force. However, the internal plastic deformation stress is not fully reproducible, which leads to unstable clamping force adjusted by the bolts and nuts. 3) The rebound tolerance of the clamping member through stamping or bending molded process can only be controlled within ± 0.5mm. On the one hand, the stamping molding clamping member is thin, and thus is easily deformed when squeezed. Because of the form inaccuracy of their own resilience after bending, the tightening torque of bolts and nuts cannot be controlled; on the other hand, the clamping member has uniform thickness and thus cannot be partially thickened to increase the strength and stability, so it cannot steadily achieve hovering at any angle in practical applications.

### SUMMARY OF THE INVENTION

The object of this invention is to provide a novel damping structure and the manufacturing method thereof so as to achieve that the damping structure can steadily stop at any angle.

According to one aspect of the invention, a novel damping structure is provided, comprising: an axially extending shaft sleeve, and a friction plate and a metal frame which are successively arranged outside of said shaft sleeve, said friction plate comprising a C-caped portion encircled said shaft sleeve and an extending portion of friction plate with up and down layers extending parallel to each other from both opposite edges of said first C-shaped portion, said metal frame being an extrusion member made of aluminum alloy or copper alloy and comprising a C-shaped portion of metal frame overlapped said first C-shaped portion of said friction plate and an extending portion of metal frame with up and down layers extending parallel to each other from both opposite edges of said second C-shaped portion, a fastener extending through said first extending portion and said second extending portion is provided for adjusting a pressing force between the friction plate and metal frame and thereby indirectly adjusting the friction force between said shaft sleeve and friction plate, a friction surface formed between said shaft sleeve and said friction plate.

Preferably, said friction plate is made of polyoxymethylene plastic.

Said shaft sleeve is made of stainless steel material.

Preferably, the surface of said shaft sleeve is a chrome plating layer.

The ports of the shaft sleeve extending out from the friction plate and the metal frame have a waist-shaped cross section separately.

Said shaft sleeve has a through hole for receiving a shaft pin.

Said fastener comprises a set of matched bolt and a locknut.

A gap with a distance of 0.04-0.06 mm is maintained between said shaft pin and said shaft sleeve.

The first and second extending portions are preferably further provided with a mounting hole through which the damping structure is connected to the element to which the damping structure is to be mounted by a conventional fixing means such as a screw; or more preferably, the first and second extending portions do not have a fitting hole, and the first and second extending portions are directly inserted into the element need to be mounted the damping structure.

According to another aspect of the invention, a manufacturing method of a novel damping structure is provided, comprising: providing an axially extending shaft sleeve; providing a friction plate arranged outside of said shaft sleeve, which comprises C-caped portion encircled said shaft sleeve and an extending portion of friction plate with up and down layers extending in parallel to each other from both opposite edges of said first C-shaped portion; and providing a metal frame arranged outside of said friction plate made of aluminum alloy or copper alloy by an extrusion molding process, which comprises a C-shaped portion of metal frame encircled said first C-shaped portion of said friction plate and an extending portion of metal frame with up and down layers extending in parallel to each other from opposite edges of said second C-shaped portion; providing a fastener extending through said first extending portion and said second extend portion to adjust a pressing force between said shaft sleeve and friction plate, and a friction surface formed between said shaft sleeve and said friction plate.

The metal frame is made from aluminum alloy or copper alloy through extrusion molding.

Among them, the metal frame is an aluminum alloy or copper alloy extrusion member. In the conventional process, extrusion molding is a process in which thermoplastic polymers such as PS \ PMMA \ PC are stirred and mixed by an extruder screw in an extruder and molded to form. Such mold equipment for extrusion molding and forming cross-section is relatively simple and without interruptions, thus the method can improve the dimensional accuracy of the extrusion molding member and reduce the rejection rate. The low melting point of aluminum just meets the requirements of such extrusion process.

The invention creatively utilizes the aluminum alloy to form the metal frame by the extrusion process, which retains the high stability and high precision of the extrusion process, such as, the precision can reach 0.05mm. The stably fixed metal frame ensures that the friction plate and shaft sleeve evenly contact with each other and thereby produces uniform friction force between shaft sleeve and friction plate. The invention retains low density characteristics of aluminum alloy, so that the metal frame is of lightweight. More important, the forming of the metal frame through the extrusion molding process releases the internal plastic deformation stress, so as to avoid the effect of the internal plastic deformation stress on the fastener for adjusting the pressing force, and thus to ensure the bolts and nuts can stably adjust the pressing force. The invention provides a damping structure with significant advantages over the prior art that safely achieves stopping at any angle.

The slotted sleeve around the shaft in the damping structure plays a role to rub with the friction plate and produces a friction force. Since both ends of the shaft sleeve need to be fixed on other components so as to be driven by other parts to rub with friction plate, thus the shaft sleeve is required to be of high strength and not easily deformed.

Therefore, this invention creatively uses a stainless steel material to manufacture a shaft sleeve, and preferably its surface is a chrome plating layer to increase the surface finish and abrasion resistance, further ensuring that the damping structure is uniformly rubbed during use.

### DESCRIPTION OF THE DRAWINGS

Figure 1a is a schematic perspective view of a vehicle according to an exemplary embodiment;
Figure 1b is a schematic perspective partial view of a vehicle interior according to an exemplary embodiment showed as Figure 1a;
Figure 2 is a schematic perspective view of a novel damping structure according to an exemplary embodiment of this invention;
Figure 3 is an exploded view of an exemplary embodiment showed as Figure 2;
Figure 4 is a schematic perspective view of a combination of a damping structure as shown in Figure 2 mounted on a plastic carrier;
Figure 5 is a schematic perspective view of a damping structure as shown in Fig. 2, which is mounted to the base of a moveable armrest with storage box.

### DETAILED DESCRIPTION OF THE PREFERRED EMBODIMENTS

The invention is described in further details with reference to specific embodiments below. It should be understood that the following examples are intended to illustrate the invention and are not intended to limit the scope of the invention.

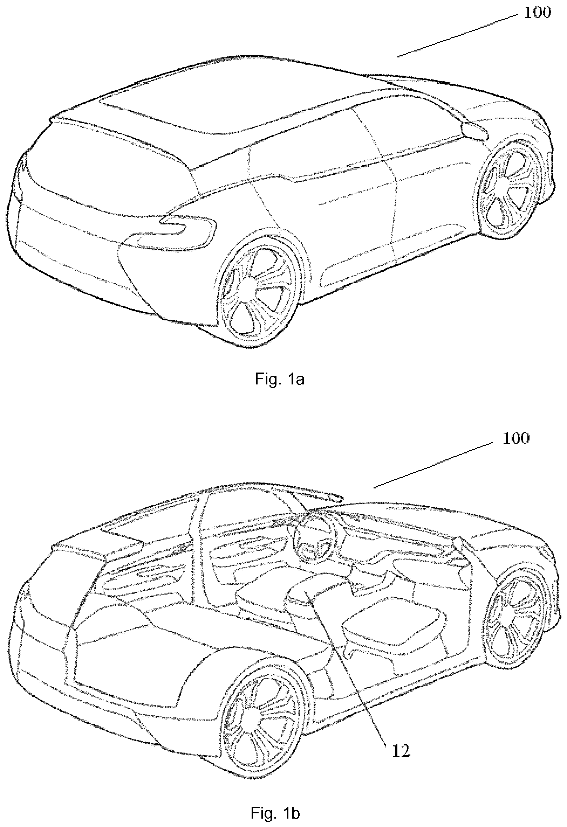

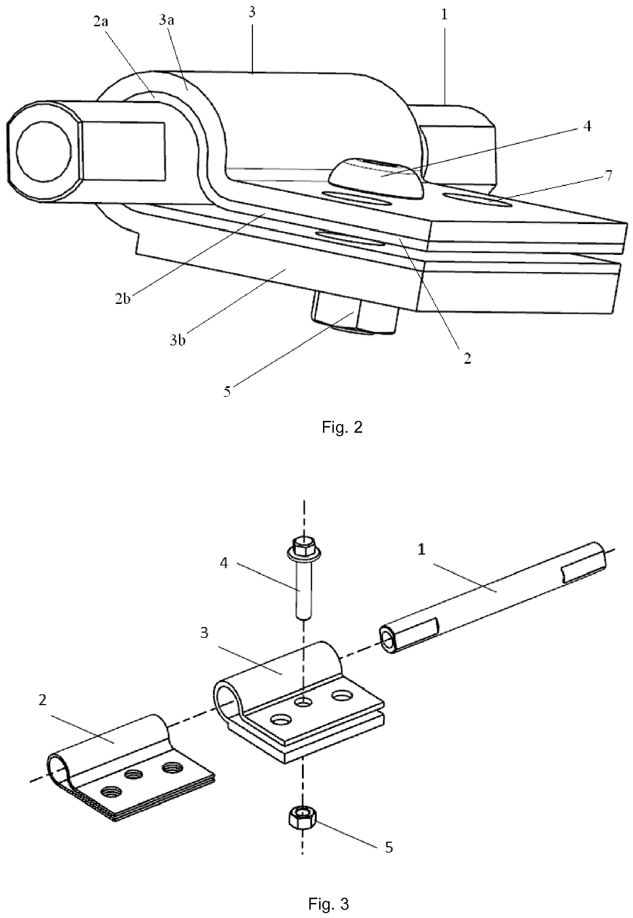

By way of example, but not limited, a novel damping structure provided by this invention is applied to an automobile 100 shown in Fig. 1a, in particular to the handrail box 12 in the interior of the automobile 100 as shown in Fig. 1b. As shown in Figs. 2 and 3, there is a novel damping structure according to a preferred embodiment of the invention comprising a shaft sleeve 1, a friction plate 2 and a metal frame 3 which are successively engaged from the inside to the outside. The two ports of the shaft sleeve 1 extending out from both ends of the friction plate 2 and the metal frame 3 have a drop-shaped cross section for facilitating connection with other elements without relative rotation. The shaft sleeve 1 has a through hole in that a shaft pin can be received so that the shaft sleeve can be easily connected to the element which needs to be assembled with the damping structure. The friction plate 2 includes a C-caped portion 2a engaging with the shaft sleeve 1 and an extending portion of friction plate 2b with up and down layers extending parallel to each other from opposite edges of the first C-shaped portion 2a. The metal hoop 3 also includes a C-shaped portion of metal frame 3a that encloses the outer surface of the first C-shaped portion 2a of the friction plate 2 and an extending portion of metal frame3b with up and down layers extending parallel to each other from opposite edges of the second C-shaped portion 3a. Wherein the first and second extending portions 2b and 3b are clamped tightly by means of the bolt 4 and the locknut 5 for adjusting the clamping force between the metal hoop 3 and the friction plate 2 and further indirectly adjusting the friction between the friction plate 2 and the shaft sleeve 1, which can provide a stable clamping force between every two components without loose after repeated use. The first and second extending portions 2b, 3b are provided with fitting holes 7 for connecting the damping structure to the elements to be mounted through for example, bolts and nuts, screws and the like.

Wherein the shaft sleeve 1 is made of a stainless steel material in order to provide a high finish on the surface of the shaft sleeve, and further preferably a chrome-plated surface. The friction plate 2 is made of polyoxymethylene plastic. Metal hoop 3 is an aluminum alloy or copper alloy extrusion member. Aluminum are molded through the extrusion process not only to provide high accuracy and stability, but also to maintain uniform pressure deformation so as to eliminate the internal plastic deformation stress and ensure the stability of compression force adjusted by bolt and nut.

Alternatively, the first and second extending portions 2b, 3b are not provided with a fitting hole. The first and second extensions 2b, 3b are directly inserted into the components to be mounted by the damping structure when it is assembled.

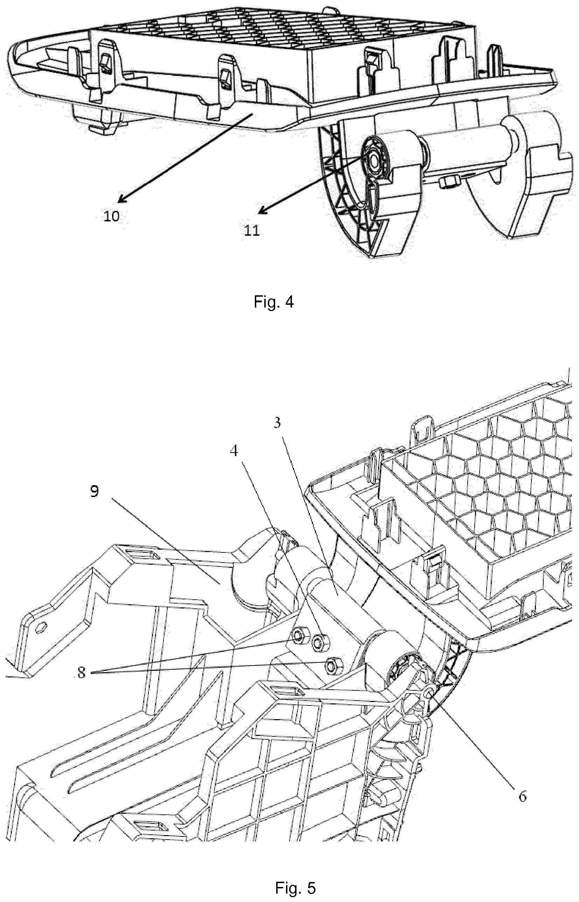

As shown in Fig. 4, a damping structure according to a preferred embodiment of this invention is mounted to a plastic carrier 10. Firstly, the shaft sleeve 1 is inserted from one side into the plastic carrier 10, which requires the diameter of a hole in the initial insertion side of the plastic carrier 10 must be larger than the diameter of the shaft sleeve 1. An anti-rotation sleeve 11 is hereby provided to prevent shaft sleeve 1 from rotation at the insertion side, and then the bolt 4 and the locknut 5 are screwed and tightened.

Next, the combination shown in Fig. 4 is fixed to the base 9 of the moveable armrest with storage box 12, as particularly shown in Fig. 5. The shaft pin 6 is passed through the shaft sleeve 1 so as to extend through the base 9 and the armrest hinge 10 of the armrest box 12. Then the mounting bolts and nuts 8 are extend through the fitting holes 7 on the first and second extending portions 2b, 3b to secure the damping structure to the base 9 of the moveable armrest with storage box 12 so that the friction plate 2 and the metal hoop 3 are fastened without rotation. Wherein, the gap between the shaft pin 6 and the shaft sleeve 1 is 0.05mm that can prevent abnormal noise. In this case, the shaft sleeve 1 rotates with the rotation of the plastic carrier 10. Since the friction plate 2 does not rotate with the rotation of the sleeve 1, a friction occurs between the shaft sleeve 1 and the friction plate 2. When the friction torque between the shaft sleeve 1 and the friction plate 2 is greater than the gravity torque at any angle of the plastic carrier 10 and the element mounted on it, the plastic carrier 10 will achieve hovering at any angle.

According to a preferred embodiment of this invention, a manufacturing method of a new damping structure is also provided, which comprises the steps as follows:
a. Providing a shaft sleeve 1;
b. Providing a friction plate 2 encircled outside of the shaft sleeve 1, which comprises a C-caped portion 2a engaging with the shaft sleeve 1 and an extending portion of friction plate 2b with up and down layers extending in parallel to each other from opposite edges of the first C-shaped portion 2a;
c. Providing a metal hoop 3 overlapped outside of the friction plate 2 by an extrusion molding using an aluminum alloy, which comprises a C-shaped portion of metal frame 3a engaging with the first C-shaped portion 2a of the friction plate 2 and an extending portion of metal frame 3b with up and down layers extending in parallel to each other from both opposite edges of the second C-shaped portion 3a; and
d. Providing a fastener extending through the first extending portion 2b and the second extending portion 3b to adjust the pressing force between the shaft sleeve 1 and the friction plate 2, and a friction surface is formed between the shaft sleeve 1 and the friction plate 2.

The method also includes providing the surface of the shaft sleeve 1 with a chrome plating layer.

According to this invention, it is provided with a novel damping structure which provides an uniform frictional force between the shaft sleeve and the friction plate, achieves hovering at any angle and thus provides a damping structure with significant advantages over the prior art.

The afore mentioned preferable embodiments are only exemplary rather than limiting in nature, and many variations of the present invention are possible in light of the above teachings. It is, therefore, to be understood that all easy, equivalent variations and modifications made according to the claims and description of present invention come within the scope of the invention as defined by the claims. The contents that have not been described in detail are the routine technical solutions.

## Claims

1. A novel damping structure, comprising: an shaft sleeve (1), and a friction plate (2) and a metal frame (3) which are successively arranged outside of said shaft sleeve (1), said friction plate (2) comprising C-caped portion(2a) encircled said shaft sleeve (1) and an extending portion of friction plate (2b) with up and down layers extending parallel to each other from both opposite edges of said first C-shaped portion (2a), said metal frame (3) being an extrusion member made of aluminum alloy or copper alloy and comprising a C-shaped portion of metal frame(3a) overlapped said first C-shaped portion (2a) of said friction plate (2) and an extending portion of metal frame(3b) with up and down layers extending parallel to each other from both opposite edges of said second C-shaped portion (3a), a fastener extending through said first extending portion (2b) and said second extending portion (3b) is provided for adjusting a pressing force between the friction plate (2) and metal frame (3) and thereby indirectly adjusting the friction force between said shaft sleeve (1) and friction plate (2), a friction surface formed between said shaft sleeve (1) and said friction plate (2).

2. The novel damping structure according to claim 1, **characterized in that** said friction plate (2) is made of polyoxymethylene plastic.

3. The novel damping structure according to claim 1, **characterized in that** said shaft sleeve (1) is made of stainless steel material.

4. The novel damping structure according to claim 3, **characterized in that** the surface of said shaft sleeve (1) is a chrome plating layer.

5. The novel damping structure according to claim 1, **characterized in that** the ports of the shaft sleeve (1) extending out from the friction plate (2) and the metal frame (3) have a waist-shaped cross section separately.

6. The novel damping structure according to claim 1 or 5, **characterized in that** said shaft sleeve (1) has a through hole for receiving a shaft pin (6).

7. The novel damping structure according to claim 1, **characterized in that** said fastener comprises a set of matched bolt (4) and a locknut (5).

8. The novel damping structure according to claim 1, **characterized in that** a gap with a distance of 0.04-0.06 mm is maintained between said shaft pin (6) and said shaft sleeve (1).

9. A manufacturing method of a novel damping structure comprising:
- providing a shaft sleeve (1);
- providing a friction plate (2) arranged outside of said shaft sleeve (1), which comprises C-caped portion (2a) encircled said shaft sleeve and an extending portion of friction plate (2b) with up and down layers extending in parallel to each other from both opposite edges of said first C-shaped portion (2a); and
- providing a metal frame (3) arranged outside of said friction plate (2) made of aluminum alloy or copper alloy by an extrusion molding process, which comprises a C-shaped portion of metal frame (3a) encircled said first C-shaped portion (2a) of said friction plate (2) and an extending portion of metal frame (3b) with up and down layers extending in parallel to each other from opposite edges of said second C-shaped portion (3a); and
- providing a fastener extending through said first extending portion (2b) and said second extend portion (3b) to adjust a pressing force between said shaft sleeve (1) and friction plate (2), and a friction surface formed between said shaft sleeve (1) and said friction plate (2).

10. The manufacturing method according to claim 9, **characterized in that** further including providing a surface of said shaft sleeve (1) as a chrome plating layer.
